# EUROPEAN PATENT APPLICATION

(11) **EP 3 797 736 A1**
(43) Date of publication of application: **31.03.2021**
(21) Application number: 19200458.8
(22) Date of filing: 30.09.2019
(51) Int. Cl.: A61C 17/02, A61C 17/028, A61C 17/024

(54) **DIRECTING A FLOW OF IRRIGATION FLUID TOWARDS PERIODONTAL POCKETS IN A SUBJECT`S MOUTH**

(71) Applicant: Koninklijke Philips N.V., 5656 AG Eindhoven (NL)
(72) Inventor: GOTTENBOS, Bart, 5656 AE Eindhoven (NL); FRACKOWIAK, Bruno Jean François, 5656 AE Eindhoven (NL); VAN HULTEN, Maaike Cornelia Johanna Wilhelmina, 5656 AE Eindhoven (NL); NGUYEN, An, 5656 AE Eindhoven (NL); LAVEZZO, Valentina, 5656 AE Eindhoven (NL); HÖTZL, Sandra, 5656 AE Eindhoven (NL)
(74) Representative: de Haan, Poul Erik

(57) **Abstract**

In the field of oral healthcare, a nozzle unit (100) is provided which comprises at least one nozzle orifice (5). The nozzle unit (100) is designed to be used as part of an oral irrigator and is configured to realize a predetermined orientation of a flow (1) of irrigation fluid with respect to a subject's respective teeth (2, 3) and periodontal pockets when placed with the at least one nozzle orifice (5) in the vicinity of the subject's respective teeth (2, 3) at the position of interdental interfaces (4), namely an orientation from the at least one nozzle orifice (5) towards the periodontal pockets at a pocket inflow angle in a range of 10° to 50° and from the at least one nozzle orifice (5) towards the surface (7) of the subject's respective teeth (2, 3) at a surface impact angle in a range of 0° to 50°.

## Description

### FIELD OF THE INVENTION

The invention relates to a nozzle unit comprising at least one nozzle orifice, which nozzle unit is designed to be used as part of an oral irrigator, for emitting a flow of irrigation fluid to be directed towards periodontal pockets in a subject's mouth.

The invention also relates to an oral irrigator comprising a nozzle unit, and to a method of performing an oral cleaning action, wherein a flow of irrigation fluid is directed towards periodontal pockets in a subject's mouth.

### BACKGROUND OF THE INVENTION

The invention is in the field of oral healthcare, which is a field in which hygiene and health of teeth and gums are of utmost importance and in which there is an ongoing need for useful oral cleaning tools and methods.

One widespread and commonly known oral disease is periodontitis, which is a gum infection. Periodontitis is irreversible due to breakdown of teeth-supporting tissues which do not completely restore. This results in the gums detaching from the teeth, whereby a gap is formed between the teeth surface and the gums. This gap, which is referred to as periodontal pocket or simply pocket, forms a favorable niche for specific bacteria species to grow. Further progression might lead to the teeth becoming loose and even fall out.

Many people are diagnosed with periodontitis, but there is also a large population which has periodontitis or early pocket formation, which is not recognized by the people concerned themselves or professionals. If in such cases no extra care is taken on the oral hygiene, the pockets can further progress and deepen, leading eventually to severe periodontitis conditions.

The golden standard treatment for periodontitis is professional scaling and root planing. This treatment involves the experienced hand of the dental professional to debride the tooth and root surface from calculus and biofilm. For successful treatment, patients are enrolled in a maintenance therapy with return for professional cleaning every 3-4 months. Studies show a low compliance of patients to commit to a one-hour appointment for a maintenance treatment spanning several years. Therefore, there is a strong need for home use products for pocket cleaning maintenance therapy. Such home use products may also be useful in preventing initial pockets from progressing, even before professional treatment of scaling and root planing is needed.

In the art, subgingival irrigation using dental water jets has been proposed as a home solution for cleaning pockets, but it appears that the available devices are not really effective in arresting or reversing periodontitis. One of the technical challenges in the field resides in the fact that fluid is not easily made to flow to the deeper parts of pockets so that fluidic forces remain at a superficial level. In this respect, it is to be noted that devices comprising a special nozzle unit for subgingival irrigation, which nozzle unit needs to be placed with the tip in the pockets, are available. However, such placing of the nozzle unit is quite difficult to realize and may be inconvenient or even painful to a person using the device of which the nozzle unit is part.

### SUMMARY OF THE INVENTION

According to the invention, measures aimed at realizing improvement in respect of cleaning periodontal pockets are taken.

In one aspect, the invention provides a nozzle unit comprising at least one nozzle orifice, which nozzle unit is designed to be used as part of an oral irrigator, for emitting a flow of irrigation fluid to be directed towards periodontal pockets in a subject's mouth, and which nozzle unit is configured to realize a predetermined orientation of a flow of irrigation fluid with respect to a subject's respective teeth and periodontal pockets in an operational situation involving functional placement of the nozzle unit with the at least one nozzle orifice in the vicinity of the subject's respective teeth at the position of interdental interfaces, namely an orientation from the at least one nozzle orifice towards the periodontal pockets at a pocket inflow angle in a range of 10° to 50° and from the at least one nozzle orifice towards the surface of the subject's respective teeth at a surface impact angle in a range of 0° to 50°, preferably 10° to 50°, the pocket inflow angle being defined in a first plane extending parallel to a central vertical axis of the subject's respective teeth and having an interdental orientation, and the surface impact angle being defined in a second plane extending both parallel to the central vertical axis of the subject's respective teeth and perpendicular to the first plane, wherein the pocket inflow angle is an angle between a direction of the flow of irrigation fluid as projected on the first plane and a direction of the central vertical axis of the subject's respective teeth, and wherein the surface impact angle is an angle between a direction of the flow of irrigation fluid as projected on the second plane and the direction of the central vertical axis of the subject's respective teeth.

In experiments and simulations which have been performed in the context of the invention, it has been found that effectiveness of cleaning periodontal pockets by means of a nozzle unit can be improved by orienting a flow of irrigation fluid with respect to a subject's respective teeth and pockets in a certain way while having a functional placement of the nozzle unit with the at least one nozzle orifice in the vicinity of the subject's respective teeth at the position of interdental interfaces. In respect of the effective orientation of the flow of irrigation fluid with respect to a subject's respective teeth and pockets, it has particularly been found that it is advantageous if the flow is oriented from the at least one nozzle orifice towards the periodontal pockets at a pocket inflow angle in a range of 10° to 50° and from the at least one nozzle orifice towards the surface of the subject's respective teeth at a surface impact angle in a range of 0° to 50°, preferably 10° to 50°, wherein the pocket inflow angle and the surface impact angle are the respective angles as defined in the foregoing. The direction of the central vertical axis of the subject's respective teeth corresponds more or less to the direction of a local normal of the subject's respective jaws and should be understood so as to be defined in relation to a subject's mouth in a normal orientation thereof with a general direction in which the jaws extend representing a more or less horizontal orientation.

When the invention is applied, that is to say, when the nozzle unit is placed in the vicinity of the subject's respective teeth at the position of interdental interfaces and the nozzle unit is oriented so as to realize the flow of irrigation fluid at the appropriate pocket inflow angle and surface impact angle, the full depth of a pocket can be reached without a need of placing a nozzle orifice in the pocket.

Numerous practical embodiments of the nozzle unit are feasible within the framework of the invention. In the following, a number of those embodiments will be defined and elucidated, wherein it is to be noted that the following classes are applicable to the embodiments of the nozzle unit according to the invention:
1) passive nozzle units which realize the effective orientation of the flow of irrigation fluid when they are properly positioned by a user. The nozzle unit may be designed to emit irrigation fluid from two or more nozzle orifices in order to increase the probability that pockets are treated in the correct way.
2) active nozzle units which are designed so as to have movement of the at least one nozzle orifice during operation, which movement may be of oscillating or rotating nature, for example. On the basis of the movement of the at least one nozzle orifice, a larger range of angles and positions is covered, realizing the appropriate ones in the process. Active nozzle units are more robust to anatomic variations and user positioning variations, but also spill more fluid on angles and positions which are not effective.
3) smart nozzle units which employ sensors to determine the correct positioning, so that the nozzle unit can be aimed to emit the irrigation fluid at the appropriate angulation. Smart nozzle units are optimal for efficacy and ease-of-use.

In a first practical embodiment, the nozzle unit comprises at least two nozzle orifices, which at least two nozzle orifices are configured and arranged to emit irrigation fluid in different directions from the nozzle unit. Such a nozzle unit may comprise a valve arrangement at a position between two nozzle orifices, for realizing a first operational condition in which one of the nozzle orifices is opened and the other of the nozzle orifices is blocked, and a second operational condition in which the one of the nozzle orifices is blocked and the other of the nozzle orifices is opened. The valve arrangement may comprise an oscillating valve, for example.

According to another or an additional option, the at least one nozzle orifice and/or a portion of the nozzle unit accommodating the at least one nozzle orifice have an adjustable positioning in the nozzle unit.

In a first practical embodiment residing under the adjustable nozzle orifice positioning option, the nozzle unit includes at least one flexible portion, which may allow for realizing manually adjustable positioning of the at least one nozzle orifice, for realizing movement of the at least one nozzle orifice under the influence of a pulsed fluid flow, for realizing twisting/rotating of a distal end portion, etc.

In a second practical embodiment residing under the adjustable nozzle orifice positioning option, the nozzle unit includes a tubular flexible portion and a distal end portion extending from the flexible portion, the distal end portion including at least two radial arms having a nozzle orifice arranged at an end thereof. In such an arrangement, rotational oscillation of the distal end portion including the radial arms can be obtained under the influence of a pulsed fluid flow.

In a third practical embodiment residing under the adjustable nozzle orifice positioning option, the nozzle unit comprises a rotatably arranged distal end portion including at least one nozzle orifice. In such a case, the nozzle unit may comprise a fluid-driven arrangement which is associated with the rotatably arranged distal end portion, wherein the fluid-driven arrangement may include an impellor, for example.

In a fourth practical embodiment residing under the adjustable nozzle orifice positioning option, the nozzle unit comprises a distal end portion including at least one nozzle orifice which is movably arranged in the distal end portion. For example, the at least one nozzle orifice may have a tiltable or rotatable arrangement in the distal end portion. In any case, in this embodiment, it may be advantageous if the nozzle unit comprises a drive mechanism which is configured and arranged to bring about movement of the at least one movably arranged nozzle orifice in the distal end portion, which movement may be an oscillating movement or any other appropriate movement.

In a fifth practical embodiment residing under the adjustable nozzle orifice positioning option, the nozzle unit comprises a sensor arrangement which is configured and arranged to sense oral configuration features, and which is configured and arranged to generate input suitable to be received and processed by a controller which is configured and arranged to control positioning of the at least one nozzle orifice and/or a portion of the nozzle unit accommodating the at least one nozzle orifice on the basis of the input from the sensor arrangement. The sensor arrangement may be designed in any suitable way, and may be equipped with 3D cameras, radar, components for tactile or capacitive sensing, etc. The oral configuration features may be at least one of a position of the gum line, a shape of the gum line, a shape of the teeth, etc.

The invention also relates to an oral irrigator, comprising a nozzle unit according to one of the options covered by the invention as defined and elucidated in the foregoing, and further comprising a fluid supply system which is configured and arranged to supply irrigation fluid to the nozzle unit so as to enable the nozzle unit to emit the irrigation fluid. Especially for the purpose of realizing adjustable positioning of the at least one nozzle orifice of the nozzle unit in embodiments of the nozzle unit which are designed to allow such positioning, it may be practical if the fluid supply system is configured and arranged to supply irrigation fluid to the nozzle unit in a pulsed flow.

In case the oral irrigator comprises a nozzle unit comprising a sensor arrangement as defined in the foregoing, it is practical if the oral irrigator further includes a fluid supply system which is configured and arranged to supply irrigation fluid to the nozzle unit so as to enable the nozzle unit to emit the irrigation fluid, and a controller which is configured and arranged to receive and process input from the sensor arrangement of the nozzle unit, and to control positioning of the at least one nozzle orifice and/or a portion of the nozzle unit accommodating the at least one nozzle orifice on the basis of the input from the sensor arrangement.

Further, in conformity with what has been defined and elucidated in the foregoing, the invention provides a method of performing an oral cleaning action, wherein a flow of irrigation fluid is directed towards periodontal pockets in a subject's mouth, in a predetermined orientation with respect to a subject's respective teeth and periodontal pockets, namely an orientation towards the periodontal pockets at a pocket inflow angle in a range of 10° to 50° and towards the surface of the subject's respective teeth at a surface impact angle in a range of 0° to 50°, preferably 10° to 50°. As explained earlier, the pocket inflow angle is defined in a first plane extending parallel to a central vertical axis of the subject's respective teeth and having an interdental orientation, and the surface impact angle is defined in a second plane extending both parallel to the central vertical axis of the subject's respective teeth and perpendicular to the first plane, wherein the pocket inflow angle is an angle between a direction of the flow of irrigation fluid as projected on the first plane and a direction of the central vertical axis of the subject's respective teeth, and wherein the surface impact angle is an angle between a direction of the flow of irrigation fluid as projected on the second plane and the direction of the central vertical axis of the subject's respective teeth.

The above-described and other aspects of the invention will be apparent from and elucidated with reference to the following detailed description of embodiments of a nozzle unit of an oral irrigator.

### BRIEF DESCRIPTION OF THE DRAWINGS

The invention will now be explained in greater detail with reference to the figures, in which equal or similar parts are indicated by the same reference signs, and in which:
Figure 1 diagrammatically shows a perspective view of two adjacent teeth and an associated gum section, and of a nozzle unit which is positioned to supply irrigation fluid to the interdental interface of the teeth;
Figure 2 illustrates how a pocket inflow angle of a flow or irrigation fluid is defined;
Figure 3 illustrates how a surface impact angle of a flow or irrigation fluid is defined;
Figure 4 diagrammatically shows a top view of two adjacent teeth and a nozzle unit according to a first embodiment of the invention, wherein a sectional view of the nozzle unit is shown;
Figure 5 diagrammatically shows a side view of the nozzle unit according to the first embodiment of the invention, wherein a sectional view of the nozzle unit is shown against a background of a tooth, and wherein further a periodontal pocket is diagrammatically shown;
Figure 6 diagrammatically shows a top view of portions of two adjacent teeth and a nozzle unit according to a second embodiment of the invention, wherein a sectional view of the nozzle unit is shown;
Figure 7 diagrammatically shows a front view of a tip of the nozzle unit according to the second embodiment of the invention;
Figure 8 diagrammatically shows a front sectional view of a tip of a nozzle unit according to a third embodiment of the invention;
Figure 9 diagrammatically shows a side sectional view of the nozzle unit according to the third embodiment of the invention;
Figure 10 diagrammatically shows a side sectional view of a nozzle unit according to a fourth embodiment of the invention; and
Figure 11 diagrammatically shows an oral irrigator including a nozzle unit according to a fifth embodiment of the invention.

### DETAILED DESCRIPTION OF EMBODIMENTS

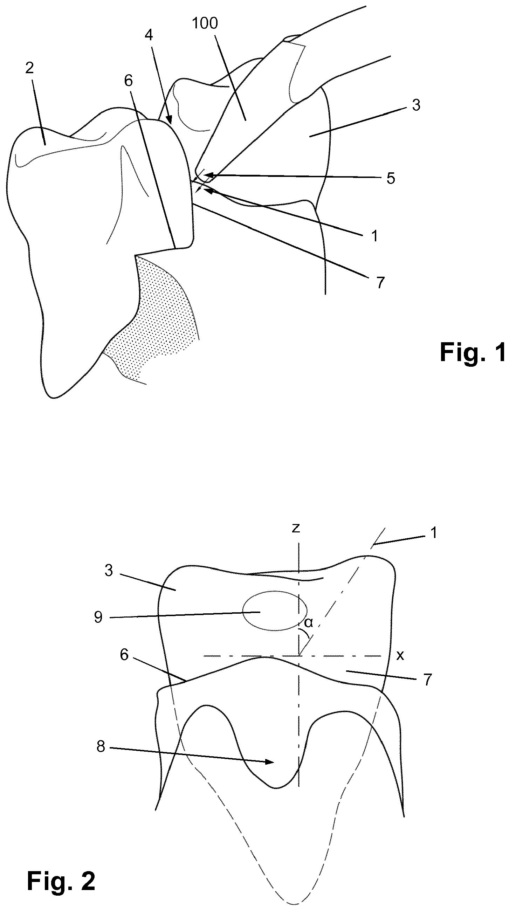

The invention relates to a nozzle unit 100 which is intended to be used as part of an oral irrigator. Figure 1 illustrates how the nozzle unit 100 can be applied for emitting a flow 1 of irrigation fluid, which is diagrammatically depicted by means of arrows in figure 1, and for directing the flow 1 of irrigation fluid towards periodontal pockets in a subject's mouth. In particular, the nozzle unit 100 is placed in the vicinity of a subject's teeth 2, 3 at the position of an interdental interface 4. The nozzle unit 100 comprises at least one nozzle orifice 5 which can be placed simply outside a pocket and still allow the irrigation fluid flowing from the at least one nozzle orifice 5 during operation to reach the full depth of the pocket, provided that the angulation and positioning of the nozzle unit 100 are set such that a predetermined orientation of the flow of irrigation fluid with respect to the teeth 2, 3 and the periodontal pocket is realized. Optimal impact positioning of the flow 1 of irrigation fluid is preferably just above a gum line 6 on the teeth 2, 3, with an optimal angulation into the pocket of 10° to 50°, combined with an angulation of 0° to 50° towards the interdental tooth surface 7. In order for a user to apply the optimal angulation in an easy fashion, the nozzle unit 100 can simply be placed on the teeth 2, 3 at the position of the interdental interface 4.

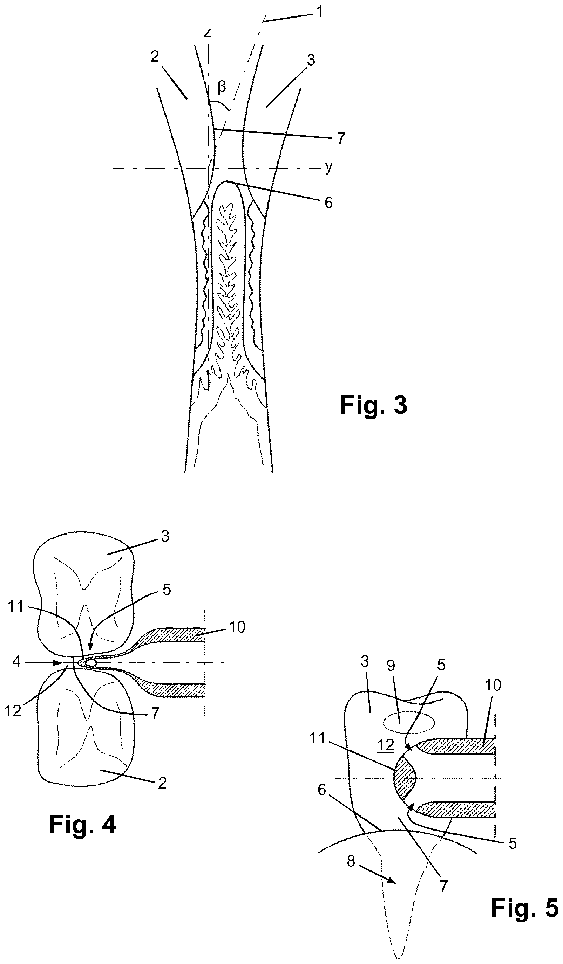

A further explanation of the two angles mentioned in the foregoing will now be provided on the basis of figures 2 and 3. In figure 2, a pocket is shown and indicated by means of reference numeral 8. An x, y, z coordinate system is defined with the zero point at the preferred impact point of the flow of irrigation fluid just above the gum line 6. The z-axis is defined as the vertical line parallel to the impact surface, the x-axis is defined as the horizontal line parallel to the impact surface, and the y-axis is defined as the horizontal line perpendicular to both the x-axis and the z-axis. An angle α between the direction of the flow 1 of irrigation fluid and the z-axis in the x-z plane projection is referred to as pocket inflow angle α, and an angle β between the direction of the flow 1 of irrigation fluid and the z-axis in the y-z plane projection is referred to as surface impact angle β.

The z-axis aligns parallel to the crown-root surface of the teeth 2, 3 in the vertical direction at the flow impact position and can thereby be denoted as aligning parallel to a central vertical axis of the teeth 2, 3. Further, the x-z plane projection is plane projection having an interdental orientation. In view thereof, the pocket inflow angle α can be defined as an angle α between (i) a direction of the flow 1 of irrigation fluid as projected on a first plane extending parallel to a central vertical axis of the teeth 2, 3 and having an interdental orientation and (ii) a direction of the central vertical axis of the teeth, and the surface impact angle β can be defined as an angle β between (i) a direction of the flow of irrigation fluid as projected on a second plane extending both parallel to the central vertical axis of the teeth 2, 3 and perpendicular to the first plane and (ii) the direction of the central vertical axis of the teeth 2, 3.

As mentioned in the foregoing, for the purpose of obtaining optimal cleaning results of the pockets 8, the nozzle unit 100 is positioned in such a way with respect to the teeth 2, 3 at the location of the interdental interface 4 that the pocket inflow angle α is in a range of 10° to 50° and the surface impact angle β is in a range of 0° to 50°. Having a pocket inflow angle α of 0° is hindered by a contact surface 9 of the teeth 2, 3, which is diagrammatically depicted as an oval in figure 2. In respect of the cleaning effect on pockets 8, experiments and simulations which have been performed in the context of the invention have demonstrated that with the optimal angulation, vortices can be obtained in the pocket, as a result of which it is assumed that the irrigation fluid is substantially equally spread throughout the pockets 8, reaching pocket areas which are more to the sides and not directly in the alignment of the flow 1 as emitted from the nozzle unit 100 through the at least one nozzle orifice 5.

It appears from the experiments and simulations which have been performed in the context of the invention that when the pocket inflow angle α is studied at a surface impact angle β of 0°, optimal cleaning is found at the pocket inflow angle α in a range of 10° to 30°. Using a pocket inflow angle α of 40°, the surface impact angle β was studied, showing the deepest removal of contaminations at 38°. The results of the experiments and simulations confirm the advantageous range of 10° to 50° in respect of the pocket inflow angle α and the range of 0° to 50° in respect of surface impact angle β, wherein it is noted with respect to the latter range that it is even more advantageous and therefore preferred to have values from 10° to 50°.

Figures 4 and 5 relate to a nozzle unit 10 according to a first embodiment of the invention. It is noted that interdental pocket cleaning is an important target, since often periodontal disease starts interdentally due to insufficient oral hygiene in most persons/subjects. In view thereof, the nozzle unit 10 is designed with a sufficiently narrow tip 11 which fits naturally into the interdental space 12. In order to cope with changing to the different quadrants of a subject's mouth, which different quadrants involve different orientations of teeth 2, 3 and pockets 8, the flow 1 of irrigation fluid is directed both up and down, as can be derived from figure 5. Alternatively, in order to save on irrigation fluid, the nozzle unit 10 could be provided with a single nozzle orifice 5 which can be rotated or bent to another side if needed.

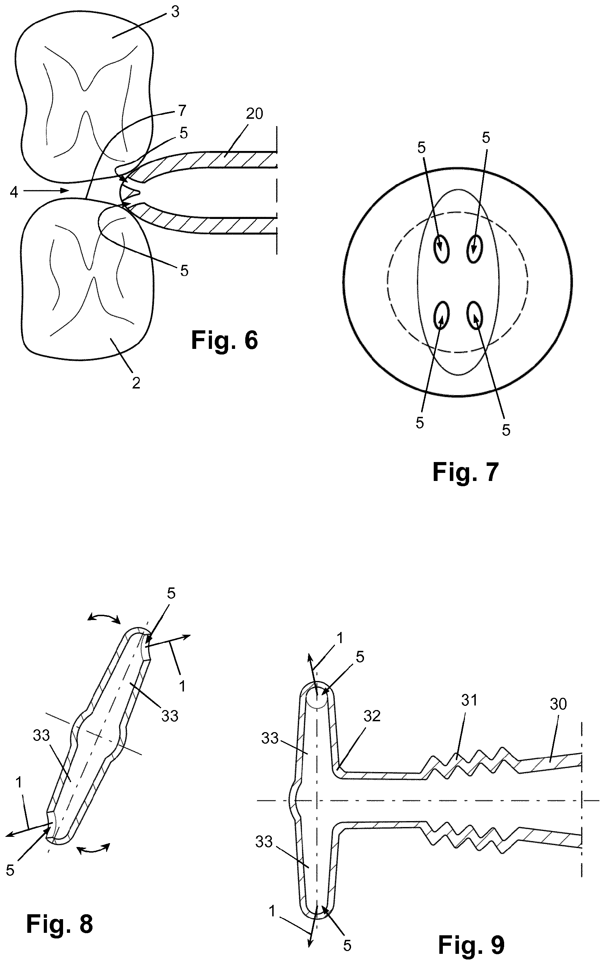

Figures 6 and 7 relate to a nozzle unit 20 according to a second embodiment of the invention, which is designed to not only ensure that an optimal value of the pocket inflow angle α can be realized, but to also direct the flow 1 of irrigation towards the interdental tooth surface 7, at an optimal value of the surface impact angle β. In particular, each of the two nozzle orifices 5 of the nozzle unit 10 according to the first embodiment of the invention is split in two nozzle orifices 5, on the basis of which it is possible to realize flows 1 of irrigation fluid which are not only directed into the pockets 8 but also slightly sideways. The optimal sideway angle can be chosen in relation to the optimal value of the surface impact angle β while taking tooth curvature into account, as a result of which the sideway angle will have a lower value than the surface impact angle β.

Figures 8 and 9 relate to a nozzle unit 30 according to a third embodiment of the invention, which is designed to enable variation of the position/orientation of the flows 1 of irrigation fluid and to thereby increase the probability of effectively cleaning the pockets 8, while compensating for variability in anatomies. In this respect, it is noted that the nozzle unit 20 according to the second embodiment of the invention could be used for emitting moving flows 1 of irrigation fluid as well, namely by employing a pulsed pressure to the nozzle unit 20, combined with having a sufficiently flexible design of the nozzle unit 20. In such a case, due to the pulses exerted during operation, the nozzle orifices 5 will move backward at every pulse, covering multiple target positions on the way back. The fact that pressure pulses can also be used to induce an oscillating rotation when the nozzle unit is designed flexible to rotate and to emit the flows 1 of irrigation fluid at radial positions is at the basis of the nozzle unit 30 according to the third embodiment of the invention.

In particular, the nozzle unit 30 according to the third embodiment of the invention includes a tubular flexible portion 31 and a distal end portion 32 extending from the flexible portion 31. The distal end portion 32 includes two radial arms 33 having a nozzle orifice 5 arranged at an end thereof, wherein it is to be noted that the number of radial arms 33 may be more than two. Under the influence of pressure pulses, an oscillating movement of the nozzle orifices 5 about a central axis of the nozzle unit 30 is obtained, as indicated in figure 8 by means of double-headed arrows.

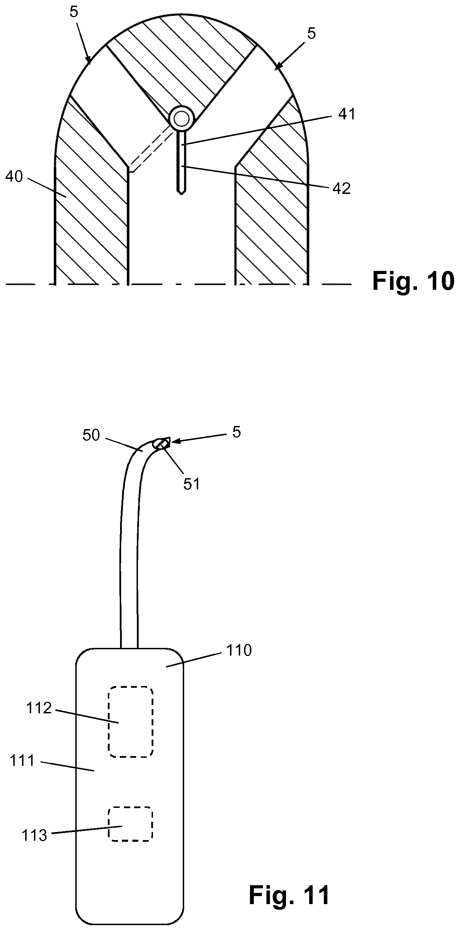

Figure 10 relates to a nozzle unit 40 according to a fourth embodiment of the invention, which is based on the nozzle unit 20 according to the second embodiment of the invention. The fact is that the nozzle unit 20 according to the second embodiment of the invention can also be used for radially emitting the flows 1 of irrigation fluid when pressure pulses are directed to two diagonally opposite nozzle orifices 5. This can be done by applying two pump channels, but more conveniently an oscillating valve could deliver the same function, all the more when a resonance frequency of the oscillating valve is close to the pulse frequency. In view thereof, the nozzle unit 40 according to a fourth embodiment of the invention is of the same design as the nozzle unit 20 according to the second embodiment of the invention and is additionally equipped with an oscillating valve 41 which comprises a movably arranged member 42, as diagrammatically shown in figure 10, which may or may not be flexible, and which may or may not be hingably arranged. In any case, the movably arranged member 42 is capable of assuming a position for closing one of the two diagonally opposite nozzle orifices 5, as indicated in figure 10 by means of dashed lines.

Other embodiments could include a fully rotating distal end portion having one or more nozzle orifices 5, wherein rotation of the distal end portion could be realized in a motorized fashion or through hydrodynamics using an impellor, for example. In such embodiments, it is possible to have a predefined pocket inflow angle α and to cover all values of the surface impact angle β by the rotation, while the flows 1 of irrigation fluid may be targeted just above the gum line 6.

Further, embodiments are feasible in which the nozzle unit is equipped with optical detectors for determining the gum line and the tooth shape, such as cameras or color sensors. Advantageously, three dimensional sensing is applied for the purpose of determining the tooth curvature. In view thereof, it is noted that 3D cameras, radar, components for tactile or capacitive sensing, etc. may be used. Information obtained through sensing/detecting may then be applied to position the at least one nozzle orifice 5 of the nozzle unit in an advantageous fashion, i.e. in such a way as to achieve good pocket cleaning results. The nozzle unit may include actuators which can direct a nozzle orifice 5 to an optimal location and an optimal angle.

Figure 11 diagrammatically shows an oral irrigator 110 including a nozzle unit 50 and a handle 111. The nozzle unit 50 may be removably arranged with respect to the handle 111 so that the nozzle unit 50 can be conveniently replaced and/or cleaned as necessary, although this is not essential within the framework of the invention. A fluid supply system 112 is located in the handle 111 and serves for supplying the irrigation fluid to the nozzle unit 50 during operation, whereby the nozzle unit 50 is enabled to emit the irrigation fluid as intended. It is practical for the fluid supply system 112 to include a reservoir for containing the irrigation fluid and a suitable type of pump or the like for realizing displacement of the irrigation fluid from the reservoir to the at least one nozzle orifice 5 of the nozzle unit 50. Further, the fluid supply system 112 may be configured to let in a suitable gas such as air to the fluid at one or more appropriate positions on the line from the reservoir to the nozzle unit 50. It may be advantageous for the fluid supply system 112 to be adapted to subject the fluid to pressure pulses at a suitable frequency during operation, as suggested earlier.

The oral irrigator 110 is equipped with a controller 113 which serves for controlling operation of the oral irrigator 110. As suggested in the foregoing, it may be advantageous to have adjustable positioning of the at least one nozzle orifice 5 and/or a portion of the nozzle unit 50 accommodating the at least one nozzle orifice 5, combined with some kind of sensor arrangement 51 in the nozzle unit 50, as diagrammatically indicated in figure 11 by means of a hatched elliptical shape. In such a case, the controller 113 is used to process information received from the sensor arrangement 51 and to determine an appropriate position and orientation of the at least one nozzle orifice 5. In particular, the controller 113 may be configured and arranged to receive and process input from the sensor arrangement 51 of the nozzle unit 50 and to control positioning of the at least one nozzle orifice 5 and/or a portion of the nozzle unit 50 accommodating the at least one nozzle orifice 5 on the basis of the input from the sensor arrangement 51.

Besides the components as mentioned, the oral irrigator 110 comprises other components which contribute to the function of emitting irrigation fluid from the nozzle unit 50 during operation, as commonly known from the field or oral irrigators. For example, it is practical if the oral irrigator 110 is equipped with a user interface allowing a user to switch the oral irrigator on and off, and preferably also to control the emission of the irrigation fluid, although it is also possible to let the emission of the irrigation fluid take place in some automated manner. Another example of a practical component is a power source in the form of a battery, which may be rechargeable.

In the context of the invention, any suitable time of positioning the nozzle unit 10, 20, 30, 40, 50, 100 at a certain spot before moving on to a next one may be applicable. In order to achieve effective cleaning, it may be practical to emit irrigation fluid during several seconds, for example, 5 to 10 seconds, at each of the spots, especially trouble spots. In respect of the irrigation fluid, it is noted that this may be water, probably mixed with appropriate additives, or any other type of fluid that is suitable for oral cleaning purposes.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The term "comprise" as used in this text will be understood by a person skilled in the art as covering the term "consist of'. Hence, the term "comprise" may in respect of an embodiment mean "consist of', but may in another embodiment mean "contain/include at least the defined species and optionally one or more other species".

The various embodiments of the nozzle unit as described in the foregoing can also be defined without reference to the pocket inflow angle α and the surface impact angle β, and the invention also covers the embodiments according to the alternative definitions which are obtained in that way, which are listed in the following.

In the first place, the invention also relates to a nozzle unit comprising at least one nozzle orifice 5, which nozzle unit is designed to be used as part of an oral irrigator 110, for emitting a flow 1 of irrigation fluid to be directed towards periodontal pockets 8 in a subject's mouth in a functional placement of the nozzle unit with the at least one nozzle orifice 5 in the vicinity of the subject's respective teeth 2, 3 at the position of interdental interfaces 4, wherein the nozzle unit comprises at least two nozzle orifices 5, which at least two nozzle orifices 5 are configured and arranged to emit irrigation fluid in different directions from the nozzle unit, and wherein optionally the nozzle unit further comprises a valve arrangement 41 at a position between two nozzle orifices 5, for realizing a first operational condition in which one of the nozzle orifices 5 is opened and the other of the nozzle orifices 5 is blocked, and a second operational condition in which the one of the nozzle orifices 5 is blocked and the other of the nozzle orifices (5) is opened.

In the second place, the invention also relates to a nozzle unit comprising at least one nozzle orifice 5, which nozzle unit is designed to be used as part of an oral irrigator 110, for emitting a flow 1 of irrigation fluid to be directed towards periodontal pockets 8 in a subject's mouth in a functional placement of the nozzle unit with the at least one nozzle orifice 5 in the vicinity of the subject's respective teeth 2, 3 at the position of interdental interfaces 4, wherein the at least one nozzle orifice 5 and/or a portion of the nozzle unit accommodating the at least one nozzle orifice 5 have an adjustable positioning in the nozzle unit. Options residing under such an embodiment include (i) an option of the nozzle unit including at least one flexible portion, (ii) an option of the nozzle unit including a tubular flexible portion 31 and a distal end portion 32 extending from the flexible portion 31, the distal end portion 32 including at least two radial arms 33 having a nozzle orifice 5 arranged at an end thereof, (iii) an option of the nozzle unit comprising a rotatably arranged distal end portion including at least one nozzle orifice 5, wherein optionally the nozzle unit further comprises a fluid-driven arrangement which is associated with the rotatably arranged distal end portion, (iv) an option of the nozzle unit comprising a distal end portion including at least one nozzle orifice 5 which is movably arranged in the distal end portion, wherein optionally the nozzle unit further comprises a drive mechanism which is configured and arranged to bring about movement of the at least one movably arranged nozzle orifice 5 in the distal end portion, and (v) an option of the nozzle unit comprising a sensor arrangement 51 which is configured and arranged to sense oral configuration features, and which is configured and arranged to generate input suitable to be received and processed by a controller 113 which is configured and arranged to control positioning of the at least one nozzle orifice 5 and/or a portion of the nozzle unit accommodating the at least one nozzle orifice 5 on the basis of the input from the sensor arrangement.

The invention further relates to an oral irrigator 110 which comprises a nozzle unit according to any of the above definitions and a fluid supply system 112 which is configured and arranged to supply irrigation fluid to the nozzle unit so as to enable the nozzle unit to emit the irrigation fluid, wherein optionally the fluid supply system 112 is configured and arranged to supply irrigation fluid to the nozzle unit in a pulsed flow. In a specific embodiment, the oral irrigator 110 comprises a nozzle unit according to option (v) as defined in the preceding paragraph, a fluid supply system 112 which is configured and arranged to supply irrigation fluid to the nozzle unit so as to enable the nozzle unit to emit the irrigation fluid, and a controller 113 which is configured and arranged to receive and process input from the sensor arrangement 51 of the nozzle unit, and to control positioning of the at least one nozzle orifice 5 and/or a portion of the nozzle unit accommodating the at least one nozzle orifice 5 on the basis of the input from the sensor arrangement 51.

## Claims

1. Nozzle unit (10, 20, 30, 40, 50, 100) comprising at least one nozzle orifice (5), which nozzle unit (10, 20, 30, 40, 50, 100) is designed to be used as part of an oral irrigator, for emitting a flow (1) of irrigation fluid to be directed towards periodontal pockets (8) in a subject's mouth, and which nozzle unit (10, 20, 30, 40, 50, 100) is configured to realize a predetermined orientation of a flow (1) of irrigation fluid with respect to a subject's respective teeth (2, 3) and periodontal pockets (8) in an operational situation involving functional placement of the nozzle unit (10, 20, 30, 40, 50, 100) with the at least one nozzle orifice (5) in the vicinity of the subject's respective teeth (2, 3) at the position of interdental interfaces (4), namely an orientation from the at least one nozzle orifice (5) towards the periodontal pockets (8) at a pocket inflow angle (α) in a range of 10° to 50° and from the at least one nozzle orifice (5) towards the surface (7) of the subject's respective teeth (2, 3) at a surface impact angle (β) in a range of 0° to 50°, the pocket inflow angle (α) being defined in a first plane extending parallel to a central vertical axis of the subject's respective teeth (2, 3) and having an interdental orientation, and the surface impact angle (β) being defined in a second plane extending both parallel to the central vertical axis of the subject's respective teeth (2, 3) and perpendicular to the first plane, wherein the pocket inflow angle (α) is an angle between a direction of the flow (1) of irrigation fluid as projected on the first plane and a direction of the central vertical axis of the subject's respective teeth (2, 3), and wherein the surface impact angle (β) is an angle between a direction of the flow (1) of irrigation fluid as projected on the second plane and the direction of the central vertical axis of the subject's respective teeth (2, 3).

2. Nozzle unit (10, 20, 30, 40, 50, 100) according to claim 1, comprising at least two nozzle orifices (5), which at least two nozzle orifices (5) are configured and arranged to emit irrigation fluid in different directions from the nozzle unit (10, 20, 30, 40, 50, 100).

3. Nozzle unit (10, 20, 30, 40, 50, 100) according to claim 2, comprising a valve arrangement (41) at a position between two nozzle orifices (5), for realizing a first operational condition in which one of the nozzle orifices (5) is opened and the other of the nozzle orifices (5) is blocked, and a second operational condition in which the one of the nozzle orifices (5) is blocked and the other of the nozzle orifices (5) is opened.

4. Nozzle unit (10, 20, 30, 40, 50, 100) according to any of claims 1-3, wherein the at least one nozzle orifice (5) and/or a portion of the nozzle unit (10, 20, 30, 40, 50, 100) accommodating the at least one nozzle orifice (5) have an adjustable positioning in the nozzle unit (10, 20, 30, 40, 50, 100).

5. Nozzle unit (10, 20, 30, 40, 50, 100) according to claim 4, including at least one flexible portion (31).

6. Nozzle unit (10, 20, 30, 40, 50, 100) according to claim 4, including a tubular flexible portion (31) and a distal end portion (32) extending from the flexible portion (31), the distal end portion (32) including at least two radial arms (33) having a nozzle orifice (5) arranged at an end thereof.

7. Nozzle unit (10, 20, 30, 40, 50, 100) according to claim 4, comprising a rotatably arranged distal end portion including at least one nozzle orifice (5).

8. Nozzle unit (10, 20, 30, 40, 50, 100) according to claim 7, comprising a fluid-driven arrangement which is associated with the rotatably arranged distal end portion.

9. Nozzle unit (10, 20, 30, 40, 50, 100) according to claim 4, comprising a distal end portion including at least one nozzle orifice (5) which is movably arranged in the distal end portion.

10. Nozzle unit (10, 20, 30, 40, 50, 100) according to claim 9, comprising a drive mechanism which is configured and arranged to bring about movement of the at least one movably arranged nozzle orifice (5) in the distal end portion.

11. Nozzle unit (10, 20, 30, 40, 50, 100) according to claim 4, comprising a sensor arrangement (51) which is configured and arranged to sense oral configuration features, and which is configured and arranged to generate input suitable to be received and processed by a controller (113) which is configured and arranged to control positioning of the at least one nozzle orifice (5) and/or a portion of the nozzle unit (10, 20, 30, 40, 50, 100) accommodating the at least one nozzle orifice (5) on the basis of the input from the sensor arrangement (51).

12. Oral irrigator (110), comprising a nozzle unit (10, 20, 30, 40, 50, 100) according to any of claims 1-11 and a fluid supply system (112) which is configured and arranged to supply irrigation fluid to the nozzle unit (10, 20, 30, 40, 50, 100) so as to enable the nozzle unit (10, 20, 30, 40, 50, 100) to emit the irrigation fluid.

13. Oral irrigator (110) according to claim 12, wherein the fluid supply system (112) is configured and arranged to supply irrigation fluid to the nozzle unit (10, 20, 30, 40, 50, 100) in a pulsed flow.

14. Oral irrigator (110), comprising a nozzle unit (10, 20, 30, 40, 50, 100) according to claim 11, a fluid supply system (112) which is configured and arranged to supply irrigation fluid to the nozzle unit (10, 20, 30, 40, 50, 100) so as to enable the nozzle unit (10, 20, 30, 40, 50, 100) to emit the irrigation fluid, and a controller (113) which is configured and arranged to receive and process input from the sensor arrangement (51) of the nozzle unit (10, 20, 30, 40, 50, 100), and to control positioning of the at least one nozzle orifice (5) and/or a portion of the nozzle unit (10, 20, 30, 40, 50, 100) accommodating the at least one nozzle orifice (5) on the basis of the input from the sensor arrangement (51).

15. Method of performing an oral cleaning action, wherein a flow (1) of irrigation fluid is directed towards periodontal pockets (8) in a subject's mouth, in a predetermined orientation with respect to a subject's respective teeth (2, 3) and periodontal pockets (8), namely an orientation towards the periodontal pockets (8) at a pocket inflow angle (α) in a range of 10° to 50° and towards the surface (7) of the subject's respective teeth (2, 3) at a surface impact angle (β) in a range of 0° to 50°, the pocket inflow angle (α) being defined in a first plane extending parallel to a central vertical axis of the subject's respective teeth (2, 3) and having an interdental orientation, and the surface impact angle (β) being defined in a second plane extending both parallel to the central vertical axis of the subject's respective teeth (2, 3) and perpendicular to the first plane, wherein the pocket inflow angle (α) is an angle between a direction of the flow (1) of irrigation fluid as projected on the first plane and a direction of the central vertical axis of the subject's respective teeth (2, 3), and wherein the surface impact angle (β) is an angle between a direction of the flow (1) of irrigation fluid as projected on the second plane and the direction of the central vertical axis of the subject's respective teeth (2, 3).
